# EUROPÄISCHE PATENTANMELDUNG

(11) **EP 0 740 429 A2**
(43) Veröffentlichungstag der Anmeldung: **30.10.1996**
(21) Anmeldenummer: 96105959.9
(22) Anmeldetag: 16.04.1996
(51) Int. Cl.: H04B 7/00

(54) **Verfahren und Anordnung zur drahtlosen Übertragung von Sprachsignalen und von Datensignalen über denselben Funkkanal zwischen einer Sendeeinrichtung und einer Empfangseinrichtung**

(30) Priorität: 27.04.1995 DE 19515546
(71) Anmelder: SIEMENS AKTIENGESELLSCHAFT, 80333 München (DE)
(72) Erfinder: Pillekamp, Klaus-Dieter, Dipl.-Ing., 40699 Erkrath (DE)

(57) **Zusammenfassung**

In der Sendeeinrichtung (DMS) werden Datensignale (DD) zusammen mit mindestens einem Steuersignal (SC) zur Kennzeichnung der Sprechpausen über denselben Funkkanal wie die Sprachsignale (DS) zur Empfangseinrichtung (DLT) übertragen, in der die Datensignale (DD) von dem Steuersignal (SC) getrennt und während der Sprechpausen ausgegeben werden. Auf diese Weise können dann, wenn Sprechpausen auftreten und Sprachsignale nicht gesendet werden, auch Datensignale auf demselben Funkkanal gesendet und empfangen werden. Dies führt zu einer besseren Auslastung des drahtlosen Funkübertragungsweges bezüglich der Informationsübertragung in beiden Übertragungsrichtungen.

## Beschreibung

Die Erfindung betrifft ein Verfahren bzw. eine Anordnung zur drahtlosen Übertragung von Sprachsignalen über mindestens einen Funkkanal zwischen einer Sendeeinrichtung und einer Empfangseinrichtung gemäß dem Oberbegriff des Patentanspruchs 1 bzw. des Patentanspruchs 8.

Lokale Mobilkommunikation bzw. globale Mobilkommunikation auf digitaler, drahtloser Basis ermöglicht ein schnurloses Telekommunikationssystem nach dem DECT-Standard (Digital European Cordless Telecommunications) bzw. ein GSM-Mobilfunksystem (Global System for Mobile Communication), bei dem über eine transparente Luftschnittstelle zwischen einem Mobilteil und einer Basisstation Sprache und Daten übertragen werden können. Das Mobilteil und die Basisstation können dabei als Sende- oder als Empfangseinrichtung aufgefaßt werden. Ein schnurloses Telekommunikationssystem ist in dem Aufsatz "Struktur des DECT-Standards", von U. Pilger, Nachrichtentechnik Elektronik 42 (1992) Januar/Februar, Nr. 1, Berlin, Seiten 23 bis 29 beschrieben. Die Nutzinformationen werden dabei in einem Übertragungsrahmen eines TDMA-Multiplexverfahrens (Time Division Multiple Access) in einem für den DECT-Standard festgelegten Frequenzbereich übertragen. Der Übertragungsrahmen umfaßt mehrere Zeitschlitze (time slots), die jeweils einen Funkkanal zur Sprach- oder Datenübertragung darstellen. Zur Übertragung der Sprachsignale oder der Datensignale werden geringfügig unterschiedliche Formate, wie in den Bildern 5a und 5b auf Seite 26 dargestellt, verwendet. Durch Zusammenfassung einzelnder TDMA-Übertragungsrahmen zu einem Vielfachrahmen kann die Anzahl der Funkkanäle und damit die Übertragungskapazität im schnurlosen Telekommunikationssystem erhöht werden. Die Signale können auf allen Zeitschlitzen, gegebenenfalls jeder Zeitschlitz auf einer anderen Trägerfrequenz des Hochfrequenzbereiches, gesendet bzw. empfangen werden.

Bei der überwiegenden Zahl von Gesprächen werden die Sprachsignale im Mittel 50 % der Verbindungszeit in der einen Richtung und 50 % der Verbindungszeit in der anderen Richtung übertragen. Dies bedeutet, daß in der Hälfte der Verbindungszeit in jeder Übertragungsrichtung lediglich ein Ruhesignal anstelle eines Nutzsignals bei der Sprachübertragung gesendet bzw. empfangen wird. Da folglich während einer Verbindung meist nur jeweils ein Teilnehmer spricht und der andere Teilnehmer in diesem Moment zuhört, ist im Mittel nur die Hälfte der Funkkapazität erforderlich. Geht man weiter davon aus, daß Sprechpausen in der Rede und Gegenrede sowie zwischen und innerhalb von Sätzen auftreten, verringert sich die Auslastung des Funkübertragungssystems mit echter Nutzsignalübertragung auf weniger als 50 %. Dennoch muß für die gesamte Dauer der Verbindung der jeweilige Funkkanal zur Übertragung der Sprachsignale belegt werden.

Aus dem Aufsatz "Unterbrochene Übertragung: DTX im GSM", von K.Hellwig, telekom praxis, 4/93 ist eine Sprechpausenerkennung zur unterbrochenen Übertragung (Discontinuous Transmission) im GSM-Mobilfunksystem bekannt, die ihre Entscheidung zwischen Sprache und Pause, d.h. zwischen Übertragen und Nichtübertragen, auf der Basis von Sprachrahmen trifft. Die Sprechpausenerkennung im GSM-Mobilfunksystem mit vorgetäuschtem Geräusch in den Lücken bringt einen Kapazitätsgewinn durch Verminderung von Gleichkanalstörungen. Außerdem wird Sendeleistung in der Mobilstation gespart, wenn der Sender in den Pausen, wenn keine Informationen übertragen werden, abgeschaltet ist.

Es ist Aufgabe der vorliegenden Erfindung, ein Verfahren und eine Anordnung zu schaffen, durch das bzw. die auch eine bessere Auslastung des drahtlosen Funkübertragungsweges bezüglich der Informationsübertragung erreicht wird.

Diese Aufgabe wird gemäß der Erfindung durch die Merkmale des Patentanspruchs 1 hinsichtlich des Verfahrens und durch die Merkmale des Patentanspruchs 8 hinsichtlich der Anordnung gelost. Weiterbildungen der Erfindung sind in Unteransprüchen angegeben.

In den Sprechpausen werden Datensignale zusammen mit mindestens einem Steuersignal zur Kennzeichnung der Sprechpausen über denselben Funkkanal wie die Sprachsignale zur Empfangseinrichtung übertragen, in der das Steuersignal von den Datensignalen getrennt und die Datensignale während der Sprechpausen ausgegeben werden. Auf diese Weise können dann, wenn Sprechpausen auftreten, auch Datensignale auf demselben Funkkanal gesendet und empfangen werden. Das erfindungsgemäße Verfahren bewirkt somit in einem Funkkanal sowohl die Sprachübertragung mit einer bestimmten Übertragungsbitrate als auch die Datenübertragung mit einer zugehörigen Datenrate. Dies führt zu einer besseren Auslastung des drahtlosen Funkübertragungsweges bezüglich der Übertragung von Informationen in beiden Übertragungsrichtungen.

Von Vorteil ist es, wenn die Datensignale und die Sprachsignale jeweils in einem Übertragungsrahmen fester Länge übertragen werden und die Sprechpausen auf die Länge des Übertragungsrahmens durch ein Rahmentaktsignal synchronisiert werden.

Von Vorteil ist es, wenn in der Empfangseinrichtung während der Sprechpausen ein Ruhesignal oder ein Rauschsignal anstelle der Sprachsignale ausgegeben wird. Während bei Übertragung eines Ruhesignals ein funktionierender Funkkanal vorgetäuscht wird, bietet das Rauschsignal den Vorteil, den Kontrast zwischen der Sprachübertragung mit Hintergrundgeräusch und der Sprechpause, in der kein Sprachsignal übertragen wird, zu verringern. Der Empfänger des Ruhesignals kann es gegebenenfalls als störend empfinden, wenn in der Sprechpause vollständige Stille herrscht und im nächsten Moment das Sprachsignal wieder angeboten wird.

Gemäß einer Weiterbildung der Erfindung wird als Steuersignal ein Steuerbit zur Kennzeichnung von Anfang und Ende der Sprechpausen verwendet.

Gemäß einer anderen Weiterbildung der Erfindung wird bei Vorliegen einer Sprechpause ein Pausesignal erzeugt und als Steuersignal für die drahtlose Übertragung bereitgestellt.

Gemäß weiterer Ausgestaltungen der Erfindung wird mit dem Pausesignal in der Empfangseinrichtung die Stromversorgung der zur Verarbeitung der Sprachsignale vorgesehenen Einrichtung bei Ausgabe der Datensignale während der Sprechpausen abgeschaltet, die zur Ausgabe der Datensignale vorgesehene Einrichtung zugeschaltet und die zur Ausgabe der Sprachsignale vorgesehene Einrichtung weggeschaltet.

Die Anordnung gemäß der Erfindung verfügt über eine Sendeeinrichtung, die neben der Sprechpausenerkennungseinheit zur Erkennung der Sprechpausen eine Steuerungseinheit zur Ausgabe mindestens eines Steuersignals zur Kennzeichnung der Sprechpausen aufweist. Darüber hinaus ist in der Sendeeinrichtung ein Schalter vorgesehen, der in Abhängigkeit des Steuersignals Datensignale während der Sprechpausen an eine Funkübertragungseinrichtung durchschaltet, die die Datensignale zusammen mit dem Steuersignal über denselben Funkkanal, der zur Übertragung der Sprachsignale benutzt wird, zur Empfangseinrichtung aussendet. Die Empfangseinrichtung weist eine Funkübertragungseinrichtung zum Empfang der drahtlos übertragenen Signale und zur Trennung der Datensignale von dem Steuersignal sowie
einen Schalter auf, der die Datensignale in Abhängigkeit eines Pausesignals während der Sprechpausen durchschaltet.

Von Vorteil ist es, wenn in der Empfangseinrichtung ein Signalgenerator zur Erzeugung eines Ruhesignals oder eines Rauschsignals mit dem ersten Schalter verbunden ist, der während der Sprechpausen das Ruhesignal oder das Rauschsignal anstelle der Sprachsignale an eine Sprachwiedergabeeinheit durchschaltet.

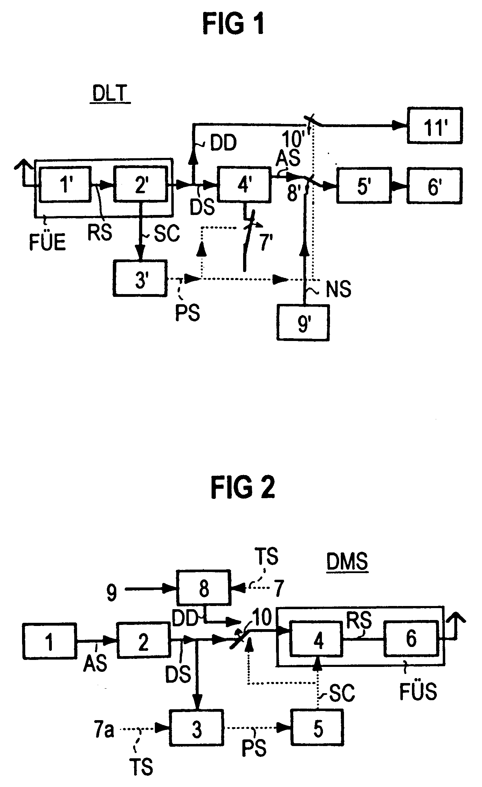

Die Erfindung wird anhand eines in Figuren dargestellten Ausführungsbeispiels erläutert. Die Figuren 1 und 2 zeigen das Blockschaltbild einer Anordnung zur drahtlosen Übertragung von Sprachsignalen und Datensignalen auf ein- und demselben Funkkanal zwischen einer in Figur 2 dargestellten Sendeeinrichtung DSM und einer in Figur 1 dargestellten Empfangseinrichtung DLT.

Die Sendeeinrichtung DSM besteht beispielsweise aus dem Mobilteil eines nach dem DECT-Standard arbeitenden schnurlosen Kommunikationssystems, die Empfangseinrichtung DLT ist ein ebenfalls nach dem DECT-Standard betriebenes Endgerät mit der Möglichkeit der Wiedergabe von Daten und Sprache. Ein derartiges Endgerät besteht beispielsweise aus einem Laptop mit eingebautem Telefon, das z.B. über eine Freisprecheinrichtung bedient werden kann, oder aus einem Mobilteil eines weiteren schnurlosen Kommunikationssystems. Für diesen Fall ist eine zusätzliche Einrichtung zum Empfang und zur Ausgabe der Daten an das Mobilteil anzuschließen.

In der Sendeeinrichtung DMS werden die von einem Mikrophon 1 aufgenommenen analogen Sprachsignale AS einer Analog-/Digitalwandereinheit 2 zugeführt und von ihr in digitale Sprachsignale DS umgewandelt. Parallel dazu werden an einem Dateneingang 9 der Sendeeinrichtung DMS digitale Datensignale als Eingangsdaten einer Datensynchronisationseinheit 8 zugeführt. Die Datensynchronisationseinheit 8 wird an einem Takteingang 7 von einem Rahmentaktsignal TS getaktet. An die Analog-/Digitalwandlereinheit 2 ist eine Sprechpausenerkennungseinheit 3 angeschaltet, von der aus den empfangenen digitalen Sprachsignalen DS ermittelt wird, wann eine Sprechpause, in der keine Sprachsignale gesendet und empfangen werden, vorliegt. Das auch am Takteingang 7a der Sprechpausenerkennungseinheit 3 anliegende Rahmentaktsignal TS wird zur Synchronisation der Sprechpausen auf die Rahmenlänge des Übertragungsrahmens zur Übertragung der Sprachsignale oder der Datensignale mit der Dauer der Sprechpausen verglichen.

Wenn der Vergleich ergibt, daß die Sprechpausendauer großer oder gleich der Rahmenlänge ist, sendet die Sprechpausenerkennungseinheit 3 ein Pausesignal PS an eine nachgeschaltete Steuerungseinheit 5. Die Steuerungseinheit 5 erzeugt aus dem eintreffenden Pausesignal PS ein vorzugsweise nur aus einem Steuerbit bestehendes Steuersignal SC zur Kennzeichnung von Anfang und Ende der jeweiligen Sprechpause. Die Sendeeinrichtung DMS weist einen Schalter 10 mit zwei Schalterstellungen auf. In einer ersten Schalterstellung werden die von der Analog-/Digitalwandlereinheit 2 abgegebenen digitalen Sprachsignale DS durchgeschaltet, während in einer zweiten Schalterstellung die von der Datensynchronisationseinheit 8 auf die Dauer eines Übertragungsrahmens synchronisierten digitalen Datensignale DD weitergeleitet werden.

Dem Schalter 10 ist eine Funkübertragungseinrichtung FS zum Aussenden der Signale in einem mehrere Funkkanäle aufweisenden Übertragungsrahmen nachgeschaltet. Bei Verwendung einer DECT-Sendeeinrichtung DMS beträgt die Länge des TDMA-Übertragungsrahmens 10 ms. Dabei entspricht jeder Zeitschlitz im Übertragungsrahmen einem eigenen Funkkanal zur Übertragung von Sprache oder Daten. Die Übertragungskapazität jedes einzelnen Funkkanals ist festgelegt. Die Funkübertragungseinrichtung FÜS besteht aus einer Signaleinheit 4 und einer dazu in Serie geschalteten Funkeinheit 6. Die an den Schalter 10 angeschlossene Signaleinheit 4 empfängt in der ersten Schalterstellung bei üblicher Sprachübertragung die digitalen Sprachsignale DS, während ihr in der zweiten Schalterstellung die digitalen Datensignale DD während der Sprechpausen zugeführt werden. Die Umschaltung des Schalters 10 von der ersten Schalterstellung in die zweite Schalterstellung wird von dem Steuersignal SC veranlaßt, das bei Vorliegen der Sprechpause, in der keine Sprachsignale zu übertragen sind, von der Steuerungseinheit 5 abgegeben wird.

Während der Sprechpausen werden die digitalen Datensignale DD und das Steuersignal SC von der Signaleinheit 4 in den Übertragungsrahmen eingefügt, der normalerweise zur Übertragung der digitalen Sprachsignale in einem festgelegten Zeitraster über die Funkeinheit 6 ausgesendet wird. Somit werden die von der Signaleinheit 4 zu Rahmensignale RS gemultiplexten Signale an die Funkeinheit 6 weitergeleitet und von dort über eine drahtlose Funkübertragungsstrecke zur Empfangseinrichtung DLT übertragen.

Die Empfangseinrichtung DLT - ebenfalls eine DECT-Empfangseinrichtung - weist eine Funkübertragungseinrichtung FÜE zum Empfang der über die Funkübertragungsstrecke drahtlos gesendeten Signale auf. Die Funkübertragungseinrichtung FÜE besteht aus einer Funkeinheit 1' und einer dazu in Serie geschalteten Signaleinheit 2', von der die im Übertragungsrahmen gemultiplexten Rahmensignale RS in digitale Sprachsignale DS, in digitale Datensignale DD und in das Steuersignal SC aufgeteilt werden. Dies bedeutet, daß während der üblichen Sprachübertragung der Übertragungsrahmen die digitalen Sprachsignale DS gemäß dem bekannten DECT-Verfahren enthält, während in den Zeiten, in denen Sprechpausen auftreten, die digitalen Datensignale DD zusammen mit dem Steuersignal SC darin enthalten sind.

Die digitalen Sprachsignale DS werden an eine Digital-/Analogwandlereinheit 4' zur Umwandlung in analoge Sprachsignale AS weitergeleitet. Die Stromversorgung der Digital-/Analogwandlereinheit 4' ist über einen Ein-/Ausschalter 7' angeschlossen. An die Signaleinheit 2' der Funkübertragungseinheit FÜE ist eine Steuerungseinheit 3' angeschaltet, der das im Übertragungsrahmen enthaltene Steuersignal SC, bestehend aus dem einen Steuerbit, zugeführt wird. Die Steuerungseinheit 3' erzeugt aus dem eintreffenden Steuersignal SC das Pausesignal PS, das den Ein-/Ausschalter 7' und weitere Schalter 8' und 10' steuert.

Der an den Ausgang der Digital-/Analogwandlereinheit 4' angeschaltete Schalter 8' bzw. der an den Ausgang der Signaleinheit 2' angeschaltete Schalter 10' sorgt für die Durchschaltung der analogen Sprachsignale AS im Falle der Sprachübertragung bzw. der digitalen Datensignale DD im Falle der Datenübertragung während der Sprechpausen. Dies bedeutet, daß bei Vorliegen des Pausesignals PS der Ein-/Ausschalter 7' in einer offenen Schalterstellung sich befindet und damit die Stromversorgung der Digital-/Anlaogwandlereinheit 4' für den Fall der Datenübertragung während der Sprechpausen abgeschaltet ist. Das Pausesignal PS bewirkt gleichzeitig, daß der Schalter 10' in einer geschlossenen Schalterstellung die Durchschaltung der digitalen Datensignale DD an eine Datenwiedergabeeinheit 11' in den Zeiten der Sprechpausen auslöst.

Der Schalter 8' weist zwei Schalterstellungen auf, wobei in der bei Vorliegen des Pausesignals PS eingenommenen Schalterstellung ein von einem Signalgenerator 9' erzeugtes Ruhe- oder Rauschsignal NS anstelle des analogen Sprachsignals AS an eine Sprachwiedergabeeinheit, bestehend aus einem Hörkapselverstärker 5' und einer dazu in Serie geschalteten Hörkapsel 6', durchgeschaltet wird. In der anderen Schalterstellung verbindet der Schalter 8' den Ausgang der Digital-/Analogwandlereinheit 4' mit dem Eingang des Hörkapselverstärkers 5', so daß die im Übertragungsrahmen in gewohnter Weise digital übertragenen und in analoge Signale umgewandelten Sprachsignale der Sprachwiedergabeeinheit auf der Empfangsseite zugeführt werden können.

Zwischen der DECT-Sendeeinrichtung DMS und der DECT-Empfangseinrichtung DLT können auf diese Weise Sprachsignale und Datensignale über ein- und denselben Funkkanal im TDMA-Übertragungsrahmen übertragen werden, so daß durch die Ausnutzung der Sprechpausen zur Datenübertragung eine bessere Auslastung des Funkübertragungsweges erreicht werden. Während der gesamten Dauer der Verbindung zwischen Sendeeinrichtung und Empfangseinrichtung wird ein Funkkanal belegt, über den im Mittel etwa 50 % der Zeitsprachinformationen in die eine Richtung und 50 % der Zeitsprachinformationen in die andere Richtung übertragen werden. Geht man davon aus, daß bei normal gesprochener Sprache 30 % Sprechpausen auftreten, wird in der Summe etwa nur bei 35 % der Gesprächszeit Sprachinformation gesendet und empfangen. Bei Benutzung eines Funkkanals mit der für den DECT-Standard festgelegten Bruttobitrate von 32 kBit ergibt sich eine Datenrate für die in den Sprechpausen übertragbaren Datensignale von 20.800 Bit (= 65 % von 32 kBit). Eine derartige Datenübertragungsrate ermöglicht mit zusätzlichem Datensicherungsverfahren einen Datendurchsatz, der einer Geschwindigkeit von 9.800 Baud entspricht.

Die Ermittlung der Sprechpausen durch die Sprechpausenerkennungseinheit 3 in der Sendeeinrichtung DMS unterscheidet zwischen Sprache und Hintergrundgeräusch, so daß keine Sprachsignale fälschlicherweise als Sprechpausen deklariert und folglich nicht übertragen werden. In der Empfangseinrichtung DLT wird - wie oben beschrieben - vorzugsweise in den Sprechpausen ein Lückenfüller anstelle der üblicherweise auszugebenden Sprachsignale dem Zuhörer über die Sprachwiedergabeeinheit durch ein Rauschsignal vorgetäuscht. Neben psychologischen Gründen spielt dabei eine entscheidende Rolle, daß der Kontrast zwischen Sprache mit Hintergrundgeräusch und Sprechpause verringert werden kann. Der Zuhörer empfindet es unter Umständen als störend, wenn in den Sprechpausen vollständige Stille herrscht und kurz danach das Sprachsignal ihm angeboten wird.

## Patentansprüche

1. Verfahren zur drahtlosen Übertragung von Sprachsignalen (DS) über mindestens einen Funkkanal zwischen einer Sendeeinrichtung (DMS) und einer Empfangseinrichtung (DLT), bei dem in der Sendeeinrichtung (DMS) Sprechpausen, in denen keine Sprachsignale über den Funkkanal übertragen werden, erkannt werden
**dadurch gekennzeichnet,**
- daß in der Sendeeinrichtung (DMS) Datensignale (DD) während der Sprechpausen bereitgestellt und zusammen mit mindestens einem Steuersignal (SC) zur Kennzeichnung der Sprechpausen über denselben Funkkanal, über den die Sprachsignale (DS) übertragen werden, zur Empfangseinrichtung (DLT) ausgesendet werden und
- daß in der Empfangseinrichtung (DLT) die Datensignale (DD) von dem Steuersignal (SC) zur Kennzeichnung der Sprechpausen getrennt und während der Sprechpausen ausgegeben werden.

2. Verfahren nach Anspruch 1,
**dadurch gekennzeichnet,**
daß die Datensignale (DD) und die Sprachsignale (DS) jeweils in einem Übertragungsrahmen fester Länge übertragen werden und daß die Sprechpausen auf die Länge des Übertragungsrahmens durch ein Rahmentaktsignal (TS) synchronisiert werden.

3. Verfahren nach Anspruch 1 oder 2,
**dadurch gekennzeichnet,**
daß als Steuersignal (SC) ein Steuerbit zur Kennzeichnung von Anfang und Ende der Sprechpausen verwendet wird.

4. Verfahren nach einem der vorhergehenden Ansprüche,
**dadurch gekennzeichnet,**
daß in der Empfangseinrichtung (DLT) ein Ruhe- oder ein Rauschsignal (NS) erzeugt wird, das während der Sprechpausen anstelle der Sprachsignale (DS) ausgegeben wird.

5. Verfahren nach einem der vorhergehenden Ansprüche,
**dadurch gekennzeichnet,**
daß in der Sendeeinrichtung (DMS) ein Pausesignal (PS) bei Vorliegen einer Sprechpause erzeugt und als Steuersignal (SC) für die drahtlose Übertragung über den Funkkanal bereitgestellt wird.

6. Verfahren nach Anspruch 5,
**dadurch gekennzeichnet,**
daß in der Empfangseinrichtung (DLT) das Pausesignal (PS) ermittelt wird und daß mit dem Pausesignal (PS) die Stromversorgung der zur Verarbeitung der Sprachsignale (DS) vorgesehenen Einrichtung (4') bei der Ausgabe der Datensignale (DD) während der Sprechpausen abgeschaltet wird.

7. Verfahren nach Anspruch 5 oder 6,
**dadurch gekennzeichnet,**
daß in der Empfangseinrichtung (DLT) das Pausesignal (PS) ermittelt wird und daß mit dem Pausesignal (PS) die zur Ausgabe der Datensignale (DD) vorgesehene Einrichtung (11') zugeschaltet und die zur Ausgabe der Sprachsignale (DS) vorgesehene Einrichtung (5',6') weggeschaltet wird.

8. Anordnung zur drahtlosen Übertragung von Sprachsignalen (DS) über mindestens einen Funkkanal zwischen einer Sendeeinrichtung (DMS) und einer Empfangseinrichtung (DLT) mit einer in der Sendeeinrichtung (DMS) angeordneten Sprechpausenerkennungseinheit (3) zur Erkennung von Sprechpausen,
**dadurch gekennzeichnet,**
- daß die Sendeeinrichtung (DMS) eine Steuerungseinheit zur Ausgabe mindestens eines Steuersignals (SC) zur Kennzeichnung der Sprechpausen aufweist,
- daß in der Sendeeinrichtung (DMS) ein Schalter (10) vorgesehen ist, der in Abhängigkeit des Steuersignals (SC) Datensignale (DD) während der Sprechpausen an eine Funkübertragungseinrichtung (FÜS) durchschaltet, die die Datensignale (DD) zusammen mit dem Steuersignal (SC) über denselben Funkkanal, der zur Übertragung der Sprachsignale (DS) benutzt wird, zur Empfangseinrichtung (DLT) aussendet,
- daß die Empfangseinrichtung (DLT) eine Funkübertragungseinrichtung (FÜE) zum Empfang der drahtlos übertragenen Signale und zur Trennung der Datensignale (DD) von dem Steuersignal (SC) aufweist und
- daß in der Empfangseinrichtung (DLT) ein Schalter (10') vorgesehen ist, der die Datensignale (DD) in Abhängigkeit eines Pausesignals (PS) während der Sprechpausen durchschaltet.

9. Anordnung nach Anspruch 8,
**dadurch gekennzeichnet,**
daß in der Empfangseinrichtung (DLT) ein weiterer Schalter (8') mit einem Signalgenerator (9') zur Erzeugung eines Ruhe- oder eines Rauschsignals (NS) verbunden ist und daß der Schalter (8') bei Vorliegen des Pausesignals (PS) das Ruhe- oder das Rauschsignal (NS) anstelle der Sprachsignale während der Sprechpausen an eine Sprachwiedergabeeinheit (5',6') durchschaltet.

10. Anordnung nach Anspruch 8 oder 9,
**dadurch gekennzeichnet,**
daß in der Empfangseinrichtung (DLT) ein weiterer Schalter (7') vorgesehen ist, der in Abhängigkeit des Pausesignals (PS) die Stromversorgung einer Digital-/Analogwandlereinheit (4') zur Umwandlung der digitalen Sprachsignale (DS) in analoge Sprachsignale (AS) abschaltet.
